# FASCICULE DE BREVET EUROPEEN

(11) **EP 3 155 551 B1**
(45) Date de publication et mention de la délivrance du brevet: **27.07.2022**
(21) Numéro de dépôt: 15732850.1
(22) Date de dépôt: 10.06.2015
(51) Int. Cl.: G06F 9/455, G06F 21/55, G06F 21/56

(54) **PROCÉDÉ DE SUPERVISION DE LA SÉCURITÉ D'UNE MACHINE VIRTUELLE DANS UNE ARCHITECTURE D'INFORMATIQUE DANS LE NUAGE**
SICHERHEITSVERWALTUNG EINER VIRTUELLEN MASCHINE IN EINER CLOUD-COMPUTING-UMGEBUNG
VIRTUAL MACHINE SECURITY MANAGEMENT METHOD IN A CLOUD COMPUTING SYSTEM

(30) Priorité: 11.06.2014 FR 1455312
(43) Date de publication de la demande: 19.04.2017
(73) Titulaire: ORANGE, 92130 Issy-les-Moulineaux (FR)
(72) Inventeur: WAILLY, Aurélien, 31370 BERAT (FR); LEGOUGE, Pascal, F-92130 Issy Les Moulineaux (FR)
(86) Numéro de dépôt international: PCT/FR2015/051527
(87) Numéro de publication internationale: WO 2015/189519

(56) Documents cités:
- US-A1- 2008 222 729
- US-A1- 2008 320 594
- KOICHI ONOUE ET AL: "Control of system calls from outside of virtual machines", PROCEEDINGS OF THE 2008 ACM SYMPOSIUM ON APPLIED COMPUTING , SAC '08, FORTALEZA, CEARA, BRAZIL, 16 mars 2008 (2008-03-16), pages 2116-1221, XP055155564, New York, New York, USA DOI: 10.1145/1363686.1364196 ISBN: 978-1-59-593753-7
- CHEN P M ET AL: "When virtual is better than real", HOT TOPICS IN OPERATING SYSTEMS, 2001. PROCEEDINGS OF THE EIGHTH WORKSHOP ON 20-22 MAY 2001, IEEE, PISCATAWAY, NJ, USA, 20 mai 2001 (2001-05-20), pages 133-138, XP010583095, DOI: 10.1109/HOTOS.2001.990073 ISBN: 978-0-7695-1040-8

## Description

La présente invention concerne un procédé de supervision de la sécurité d'une machine virtuelle comprise dans un environnement informatique virtualisé, c'est-à-dire rendu virtuel.

Elle trouve une application particulièrement intéressante dans la sécurisation des systèmes informatiques dont l'architecture est basée sur des ressources informatiques dématérialisées, mises à disposition d'utilisateurs qui y accèdent à distance. Une telle architecture est plus connue sous le nom d'architecture en « cloud computing », ou architecture « d'informatique dans le nuage ». Le concept de cloud computing désigne des architectures informatiques dans lesquelles des traitements informatiques traditionnellement localisés sur des postes utilisateurs d'une entreprise ou sur des serveurs de l'entreprise sont déportés sur des serveurs distants.

Une architecture en cloud computing comprend habituellement une plate-forme locale d'accès client, adaptée pour accéder à un ou des services à travers une souscription à un service en cloud computing. La plate-forme locale d'accès est par exemple un ordinateur, ou un terminal mobile utilisé par le client pour accéder au service à travers un réseau, par exemple le réseau Internet. L'architecture comprend également une plate-forme déportée sur un serveur hôte qui possède des ressources matérielles sur lesquelles s'appuie le service en cloud computing, une base de données clients adaptée pour gérer les services souscrits par des clients, et un réseau adapté pour permettre l'accès par le client au service souscrit. L'offre de service est proposée par un fournisseur de services cloud qui gère la plate-forme déportée ainsi que la base de données clients. Le fournisseur de services met à disposition du client une ou des machines virtuelles qui constituent l'environnement d'exécution du service propre le client. La ou les machines virtuelles utilisent les ressources du serveur hôte pour s'exécuter.

Lorsqu'un client souhaite souscrire à un service en cloud computing proposé par un fournisseur de services, il définit le service auquel il souhaite souscrire sous forme d'une configuration de ressources d'une machine virtuelle. Par exemple, la configuration de la machine virtuelle est définie sous forme d'un nombre de processeurs, d'une taille mémoire, d'un type de carte mémoire, etc. Une fois la configuration établie, la machine virtuelle, sous forme de fichier de configuration est mémorisée par le fournisseur de services dans la base de données clients. Lorsque le client souhaite exécuter la machine virtuelle afin d'accéder au service souscrit, la machine virtuelle est démarrée par le fournisseur de services sur le serveur hôte. Le client exécute alors le service souscrit depuis la plate-forme locale d'accès, comme si le service était installé localement. Il utilise cependant des ressources de la plate-forme d'exécution.

Il est connu que les aspects sécurité sont un point critique de toute architecture informatique en réseau, et une architecture en cloud computing ne fait pas exception à cette règle. En ce qui concerne la gestion de la sécurité dans un service en cloud computing il est habituel de faire intervenir un agent de sécurité. Un agent de sécurité est une brique logicielle autonome installée sur un système à protéger, en l'espèce sur une machine virtuelle, et en charge de la supervision de la sécurité en vue de détecter des problèmes de sécurité, voire d'y remédier. Un problème de sécurité sur une machine virtuelle consiste par exemple en un virus, un accès non autorisé à une zone mémoire par un programme, etc.

Dans le cas de la souscription par un client à un service en cloud computing, l'agent de sécurité peut être défini par le client et faire partie de la configuration initiale de la machine virtuelle. L'agent est par exemple un anti-virus connu. L'agent de sécurité est ainsi maîtrisé par le client. Par contre, il est souvent limité à une certaine fonctionnalité, ici la détection de virus. Dans un autre exemple de réalisation, l'agent de sécurité peut être proposé par le fournisseur de services et traiter divers aspects de sécurité. Le fournisseur de services installe alors l'agent sur la machine virtuelle du client lors du démarrage de celle-ci dans l'environnement d'exécution. Cependant les clients peuvent être réticents à intégrer de tels agents qu'ils ne maitrisent pas dans leur machine virtuelle. Par exemple, ils peuvent craindre que la protection de leurs données en termes de confidentialité ne soit pas garantie. Malgré tout, ces mêmes clients souhaitent augmenter le niveau de sécurité de leur machine virtuelle.

Les techniques actuelles de sécurisation de machines virtuelles, à base d'agents de sécurité, ne permettent pas de satisfaire complètement les besoins des clients en termes de sécurité. La demande de brevet US20080222729A1 divulgue un système de détection de vers informatiques en redirigeant les paquets vers une machine virtuelle clonée.

La publication « When virtual is better than real » de P.M. Chen et al, publiée dans les « Proceedings Eighth Workshop on Hot Topics in Operating Systems » décrit une duplication d'une machine en une machine virtuelle afin d'effectuer une analyse de sécurité sur la machine virtuelle.

Un des buts de l'invention est de remédier à des insuffisances/inconvénients de l'état de la technique et/ou d'y apporter des améliorations.

A cette fin, l'invention propose un procédé de supervision de la sécurité d'une machine virtuelle hébergée par un système hôte, la machine virtuelle comprenant un système d'exploitation, ledit système d'exploitation communiquant avec un hyperviseur du système hôte, ledit hyperviseur s'interfaçant entre le système d'exploitation et des ressources matérielles du système hôte, ledit procédé comprenant les étapes suivantes, mises en œuvre par l'hyperviseur :
- réception en provenance du système d'exploitation d'au moins une instruction machine correspondant à une interruption au niveau du système d'exploitation, ladite interruption étant consécutive à un événement survenu au niveau de la machine virtuelle,
- exécution de l'instruction par l'hyperviseur au moyen des ressources matérielles du système hôte et transmission au système d'exploitation d'un flux de données comprenant le résultat de l'exécution, caractérisé en ce que le flux de données envoyé est dupliqué en un second flux et le second flux est analysé par un agent de sécurité s'exécutant sur une entité distincte de la machine virtuelle pour détecter un problème de sécurité lors du traitement de l'interruption.

Le procédé décrit permet de superviser la sécurité d'une machine virtuelle d'un client de manière non intrusive. En effet, l'hyperviseur, qui s'interface entre le système d'exploitation et les ressources matérielles du système hôte pour fournir à la machine virtuelle des ressources virtualisées, reçoit, suite à une interruption au niveau du système d'exploitation de la machine virtuelle, un flux de données résultant du traitement de l'interruption au niveau des ressources matérielles. L'hyperviseur duplique ce flux. Il envoie ce flux au système d'exploitation de la machine virtuelle du client, ce qui correspond à un traitement normal de l'interruption, et un agent de sécurité analyse le flux dupliqué. L'agent de sécurité ne peut donc compromettre la machine virtuelle du client puisqu'il supervise un flux dupliqué, indépendant du flux transmis à la machine virtuelle du client. Le fournisseur de services peut ainsi offrir une nouvelle offre de sécurité à des clients qui ont la garantie que leur machine virtuelle ne sera pas impactée par l'agent de sécurité qui est mis en œuvre.

Dans un exemple de réalisation, le procédé de supervision comprend une étape de duplication de la machine virtuelle en une machine virtuelle dupliquée, et une étape d'installation de l'agent de sécurité sur la machine virtuelle dupliquée, le second flux étant transmis au système d'exploitation de la machine dupliquée pour conserver au niveau de la machine virtuelle dupliquée une image conforme de la machine virtuelle.

Dans cet exemple de réalisation, la machine virtuelle du client est dupliquée en mémoire et l'agent de sécurité est installé par l'hyperviseur sur la machine dupliquée. La machine virtuelle dupliquée, qui est sur des pages mémoire différentes de la machine virtuelle du client, est donc complètement indépendante de la machine virtuelle du client. Suite à une interruption au niveau du système d'exploitation de la machine virtuelle du client, elle reçoit le même flux de données que la machine virtuelle du client et impacte les périphériques d'entrée/sortie virtuels de la même façon que la machine virtuelle du client. Elle se comporte donc de la même façon que la machine virtuelle du client sans qu'aucune information ne soit échangée entre la machine virtuelle du client et la machine dupliquée. De même, il n'y a aucun partage de charge entre les deux machines virtuelles, ni aucune redondance. Le client a donc la garantie de l'indépendance complète de sa machine virtuelle par rapport à l'agent de sécurité proposé par le fournisseur de services. La duplication de la machine virtuelle du client est un processus connu et maîtrisé qui n'est pas coûteux pour le fournisseur de services en termes de temps de traitement et de complexité. La solution est donc aisée à mettre en œuvre.

Dans un autre exemple de réalisation, l'agent de sécurité s'exécute dans une même couche d'exécution que l'hyperviseur, ledit agent de sécurité construisant une représentation de la machine virtuelle à partir du second flux.

Dans cet exemple, l'agent de sécurité construit lui-même une représentation mémoire de la partie de la machine virtuelle du client qu'il supervise. Cette construction est faite lors du démarrage ou redémarrage de la machine virtuelle. Ce mode de réalisation présente l'avantage d'être moins coûteux en espace mémoire que la solution présentée précédemment. En effet, elle ne nécessite pas une duplication complète de la machine virtuelle du client en mémoire. La complexité de l'agent en termes de traitement est cependant plus importante, car c'est lui qui construit une représentation de la machine virtuelle en fonction des événements qu'il doit superviser.

De façon avantageuse, les étapes de duplication de flux, de transmission du flux et d'exécution de l'instruction sont exécutées de manière atomique.

Le caractère atomique des étapes de duplication et transmission de flux, et d'exécution de l'instruction associée à l'interruption garantit que l'agent de sécurité supervise à tout moment exactement les mêmes événements que ceux qui se produisent sur la machine virtuelle du client, que ce soit à partir de la représentation de la machine virtuelle qu'il a construite ou à partir de la machine dupliquée. En effet, aucune désynchronisation n'apparaît entre la machine virtuelle du client et la représentation de la machine virtuelle qu'il a construite ou la machine dupliquée.

L'invention concerne aussi un dispositif de supervision de la sécurité d'une machine virtuelle, la machine virtuelle étant hébergée sur ledit dispositif et comprenant un système d'exploitation, ledit système d'exploitation communiquant avec un hyperviseur du système hôte, ledit hyperviseur s'interfaçant entre le système d'exploitation et des ressources matérielles du système hôte, ledit dispositif comprenant :
- des moyens de réception, agencés pour recevoir en provenance du système d'exploitation au moins une instruction machine associée correspondant à une interruption au niveau du système d'exploitation, ladite interruption étant consécutive à un événement survenu au niveau de la machine virtuelle,
- des moyens d'exécution et de transmission, agencés pour exécuter ladite instruction au moyen des ressources matérielles du système hôte et pour transmettre au système d'exploitation un flux comprenant le résultat de l'exécution,
- des moyens de duplication agencés pour dupliquer le flux reçu en un second flux,
- un agent de sécurité, agencé pour s'exécuter sur une entité distincte de la machine virtuelle et pour analyser le second flux afin de détecter un problème de sécurité lors du traitement de l'interruption.

Dans un exemple de réalisation, le dispositif de supervision comprend en outre :
- des deuxièmes moyens de duplication, agencés pour dupliquer la machine virtuelle en une machine virtuelle dupliquée, et
- des moyens d'installation, agencés pour installer l'agent de sécurité sur la machine virtuelle dupliquée.

L'invention concerne aussi un système de supervision de la sécurité, comprenant :
- un dispositif de supervision de la sécurité selon l'invention,
- la machine virtuelle,
- une machine virtuelle dupliquée destinée à héberger l'agent de sécurité.

L'invention porte aussi sur un programme d'ordinateur sur un support de données et chargeable dans la mémoire d'un ordinateur, le programme comprenant des instructions de code pour l'exécution des étapes du procédé de supervision de la sécurité selon invention, lorsque le programme est exécuté sur ledit ordinateur

L'invention concerne aussi un support de données dans lequel est enregistré le programme selon l'invention.

D'autres caractéristiques et avantages de la présente invention seront mieux compris de la description et des dessins annexés parmi lesquels :
- la figure 1 est une représentation schématique d'un modèle d'architecture en cloud computing adapté pour la mise en œuvre du procédé de supervision de la sécurité selon un exemple de réalisation de l'invention ;
- la figure 2 présente les étapes du procédé de supervision de la sécurité d'une machine virtuelle dans une architecture d'informatique dans le nuage, selon un premier exemple de réalisation de l'invention ;
- la figure 3 présente les étapes du procédé de supervision de la sécurité d'une machine virtuelle dans une architecture d'informatique dans le nuage, selon un deuxième exemple de réalisation de l'invention ;
- la figure 4 est une représentation schématique d'un dispositif de supervision de la sécurité d'une machine virtuelle, selon un exemple de réalisation de l'invention.

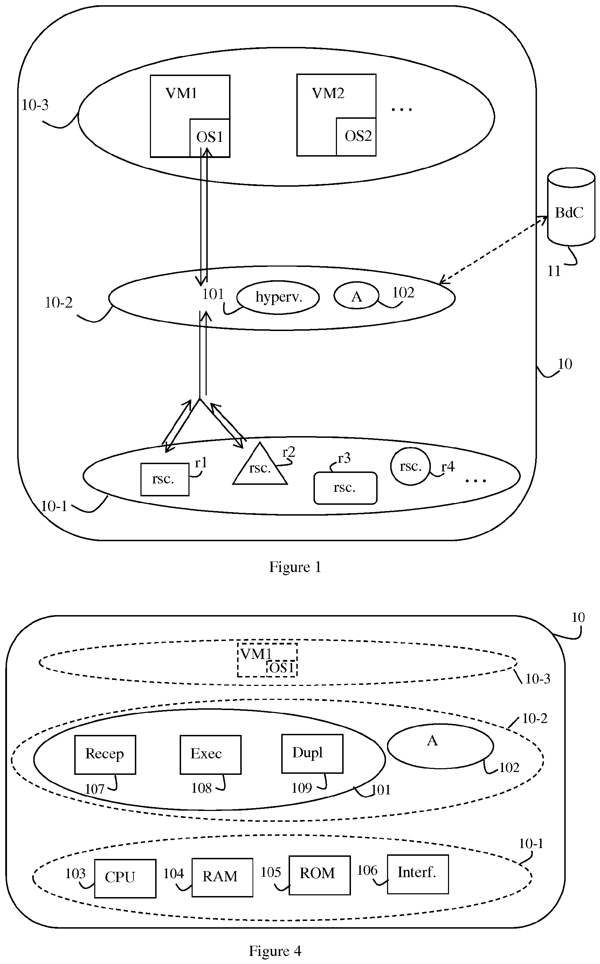

Un modèle d'architecture adapté pour la mise en œuvre d'un procédé de supervision de la sécurité, selon un exemple de réalisation de l'invention va maintenant être décrit en relation avec la figure 1.

Habituellement, une architecture d'informatique dans le nuage (on parle habituellement d'architecture en « cloud computing »), est conforme à un modèle qui comprend plusieurs couches d'exécution. Différents modèles existent. Un exemple de modèle d'architecture en cloud computing pour une architecture qui comprend un serveur hôte 10 est décrit en relation avec la figure 1.

Le serveur hôte 10 comprend ainsi une première couche d'exécution, ou couche d'exécution matérielle 10-1. Cette couche d'exécution matérielle 10-1 comprend un ensemble de ressources matérielles r1, r2, r3, r4, etc., du serveur hôte 10. Une ressource matérielle correspond par exemple à de la mémoire, à une interface réseau, à un micro-processeur, etc. Une deuxième couche d'exécution est une couche de virtualisation 10-2. La couche de virtualisation 10-2 est adaptée pour présenter à des systèmes d'exploitation OS1, OS2, etc., de machines virtuelles VM1, VM2, etc., d'une couche virtuelle 10-3, un espace de ressources virtuelles, construit à partir d'un espace de ressources physiques du serveur hôte 10, en l'espèce l'espace des ressources r1, r2, r3, r4, etc. de la couche d'exécution matérielle 10-1. La couche de virtualisation 10-2 est mise en œuvre par un module de virtualisation appelé habituellement hyperviseur 101 qui gère l'allocation des ressources matérielles entre différentes instances de machines virtuelles et qui met à disposition des machines virtuelles ces ressources virtualisées. En particulier l'hyperviseur 101 gère l'accès des systèmes d'exploitation OS1, OS2, etc., des machines virtuelles VM1, VM2, etc., à l'architecture matérielle sous-jacente. La couche de virtualisation 10-2 est adaptée également pour la création, l'instanciation, la libération, le placement des machines virtuelles VM1, VM2, etc., exécutées de manière concurrente sur une même machine physique, ici le serveur hôte 10. Enfin, une troisième couche d'exécution est la couche virtuelle 10-3. Les ressources associées à cette couche sont les machines virtuelles VM1, VM2, etc. qui s'exécutent dans l'environnement virtuel mis à disposition par le serveur hôte 10 en tant que machine physique. Les machines virtuelles sont par exemple des machines virtuelles de clients qui peuvent comprendre des données ou du code sensibles à protéger.

Selon l'exemple de réalisation décrit, la couche de virtualisation 10-2 comprend un agent de sécurité 102, adapté pour analyser des événements qui surviennent au niveau d'une machine virtuelle et pour détecter tout comportement anormal lorsque l'agent de sécurité 102 est associé par l'hyperviseur 101 à la machine virtuelle. Un comportement anormal est par exemple l'accès par un programme qui s'exécute dans la machine virtuelle à une zone mémoire normalement non accédée par ce programme, la présence d'un virus, des instructions réseau suspectes ciblant la machine virtuelle ou émanant d'elle, etc. Lorsque l'agent de sécurité 102 détecte un comportement anormal au niveau de la machine virtuelle à laquelle il est associé, il transmet des informations relatives à ce comportement anormal à un analyseur (non représenté sur la figure 1). L'analyseur est agencé pour analyser les événements détectés comme anormaux, éventuellement alerter le client à qui appartient la machine virtuelle et éventuellement mettre en œuvre des contre-mesures. A noter que l'agent de sécurité 102 ne met en œuvre aucune contre-mesure sur la machine virtuelle à laquelle il est associé. Il est chargé de la supervision d'événements uniquement. L'agent de sécurité 102 est configuré pour superviser un ou plusieurs types d'événements sur la machine virtuelle. Par exemple, il peut être configuré pour détecter la présence d'un virus, pour détecter un accès par un programme à une zone mémoire à laquelle le programme n'est pas autorisé à accéder, pour détecter des instructions réseau suspectes, etc. L'agent de sécurité 102 est un module logiciel autonome destiné à être associé à une machine virtuelle par l'hyperviseur 101.

Lorsqu'une machine virtuelle est démarrée et en cours d'exécution, une action au niveau de la machine virtuelle, par exemple le déplacement de la souris par un utilisateur, la sauvegarde d'un fichier, est gérée de manière classique par le système d'exploitation de la machine virtuelle sous forme d'interruption. Une interruption consiste à interrompre l'exécution normale d'un programme par le microprocesseur de manière à exécuter un autre programme, ou routine d'interruption, par exemple celui destiné à prendre en compte l'action de l'utilisateur sur la machine virtuelle. La routine d'interruption comprend des instructions machines, c'est-à-dire des instructions bas-niveau, en langage machine, tel qu'en assembleur. Ces instructions bas-niveau impliquent des ressources, telles que de la mémoire, des interfaces, des périphériques, etc. L'hyperviseur 101 qui met à disposition de la machine virtuelle des ressources virtualisées est un intermédiaire entre le système d'exploitation de la machine virtuelle et les ressources matérielles de la couche d'exécution matérielle 10-1 du système hôte 10. Ainsi, lors d'une interruption au niveau d'un système d'exploitation d'une machine virtuelle, par exemple le système d'exploitation OS1 de la machine VM1, l'hyperviseur 101 reçoit les instructions machine du système d'exploitation OS1 qui impliquent les ressources virtualisées et commande l'exécution de ces instructions à partir des ressources matérielles du système hôte 10. Il transmet ensuite au système d'exploitation OS1 le résultat de cette exécution sous forme d'un flux de données comprenant le résultat de cette exécution. Ce flux comprend des événements à destination des périphériques d'entrée/sortie virtuels utilisés par la machine virtuelle VM1. Dans le cas du déplacement de la souris, le traitement de l'interruption provoque ainsi le déplacement effectif de la souris sur un écran associé à la machine virtuelle VM1. L'exécution de la routine d'interruption ne peut être interrompue, on dit que les instructions de la routine sont exécutées de manière atomique.

De même qu'il existe différents modèles d'architecture, on recense également différentes offres de services en cloud computing. On connaît ainsi un premier modèle, appelé « SaaS » (de l'anglais « Software-as-a-Service ») dans lequel un fournisseur de services met à disposition de l'utilisateur une pile logicielle complète, depuis le matériel jusqu'aux applications. On connaît un deuxième modèle, appelé « PaaS » (de l'anglais « Platform-as-a-Service »), dans lequel les utilisateurs déploient leurs propres applications à l'aide d'environnements et d'outils mis à disposition par le fournisseur de services. Enfin, on connaît un troisième modèle, appelé « IaaS » (de l'anglais « Infrastructure-as-a-Service ») dans lequel le fournisseur de services met à disposition des utilisateurs des ressources de calcul, de communication ou de stockage. Les utilisateurs peuvent alors déployer et exécuter n'importe quel logiciel, y compris leur propre système d'exploitation, qui exploite les ressources ainsi mises à disposition. Dans l'exemple de réalisation décrit ici, on suppose qu'un client souscrit à une offre de type IaaS.

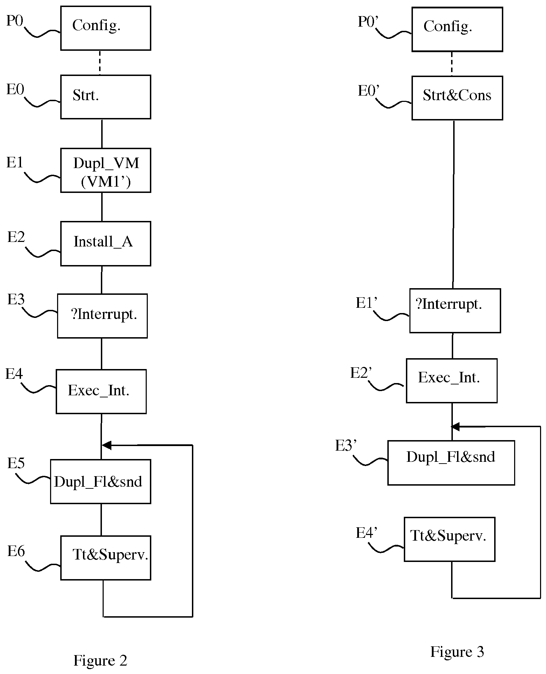

Les étapes d'un procédé de supervision de la sécurité d'une machine virtuelle dans une architecture d'informatique dans le nuage, selon un premier exemple de réalisation, vont maintenant être décrites en relation avec la figure 2.

L'architecture en cloud computing est conforme au modèle décrit en relation avec la figure 1.

Dans une phase initiale P0 de configuration, le client configure sa machine virtuelle, par exemple la machine virtuelle VM1. A cet effet il précise les ressources dont il a besoin, en termes par exemple de taille mémoire, de type de carte mémoire, de nombre de processeurs et de cartes réseau, de version de machine virtuelle, etc. La configuration ainsi définie est sous forme d'un fichier de configuration que le client transmet au fournisseur de services. La configuration reçue par le fournisseur de services est mémorisée dans une base de données clients 11 selon la figure 1. La base de données clients 11 est destinée à mémoriser une image de la machine virtuelle VM1 du client utilisée lors du premier démarrage ou d'un redémarrage ultérieur de la machine virtuelle. Par exemple, lors du premier démarrage de la machine virtuelle VM1 par l'hyperviseur 101, c'est-à-dire lors de la création de la machine virtuelle VM1 et de sa première mise en œuvre dans l'environnement d'exécution, c'est-à-dire dans le système hôte 10, les ressources précisées comme paramètres de configuration sont allouées par l'hyperviseur sous forme de ressources virtualisées à la machine virtuelle VM1. Lors d'une libération ultérieure de la machine virtuelle VM1, c'est-à-dire en fin d'exécution de la machine virtuelle VM1 dans l'environnement d'exécution, une image mémoire de la machine virtuelle VM1 est mémorisée dans la base de données client 11. Les modifications apportées par le client à la machine virtuelle VM1 lors de l'exécution de celle-ci dans l'environnement d'exécution sont ainsi prises en compte lors d'un redémarrage ultérieur.

Dans une étape E0 de démarrage ou de redémarrage de la machine virtuelle, la machine virtuelle VM1 est démarrée ou redémarrée par le fournisseur de services. Ce démarrage fait suite à une commande de démarrage du client à partir d'une plate-forme d'accès locale du client. Ce démarrage signifie que la machine virtuelle VM1 telle que mémorisée dans la base de données clients 11 est chargée par l'hyperviseur 101 sur le serveur hôte 10 du fournisseur de services. Toutes les ressources paramétrées pour la machine VM1 sont alors fournies par l'hyperviseur 101 à la machine virtuelle VM1 pour que celle-ci s'exécute conformément au paramétrage sauvegardé dans la base de données clients 11. Le client peut alors disposer de sa machine virtuelle VM1 afin d'installer tous les logiciels dont il a besoin pour son activité.

Dans un premier exemple de réalisation, lorsque la machine virtuelle VM1 est démarrée sur le système hôte 10 par l'hyperviseur 101, dans une étape E1 de duplication, l'hyperviseur 101 duplique la machine virtuelle VM1 du client. Cette duplication consiste à créer une deuxième machine virtuelle VM1' identique en tout point à la machine virtuelle VM1 du client. Identique signifie que la machine dupliquée VM1' possède les mêmes caractéristiques que la machine virtuelle VM1 du client : même adresse réseau, même adresse MAC ; elle dispose des mêmes quantités de ressources, etc. Elle est cependant installée sur des pages mémoire différentes. La machine dupliquée VM1' est donc distincte de la machine virtuelle VM1.

Dans une étape E2 d'installation de l'agent, l'agent de sécurité 102 est installé par l'hyperviseur 101 sur la machine virtuelle dupliquée VM1'. Au terme de cette installation, l'agent de sécurité 101 s'exécute sur la machine virtuelle dupliquée VM1' et est apte à superviser l'exécution de la machine virtuelle dupliquée VM1' afin de détecter d'éventuels problèmes de sécurité.

Dans une étape E3 de réception d'une interruption, consécutive à un événement survenu au niveau de la machine virtuelle VM1, l'hyperviseur 101 reçoit du système d'exploitation OS1 de la machine virtuelle VM1 une séquence d'au moins une instruction machine correspondant à une routine d'interruption. Plus précisément, un événement au niveau de la machine virtuelle VM1 du client déclenche une interruption au niveau du système d'exploitation OS1 de la machine virtuelle VM1. Cette interruption correspond à la séquence d'instructions. L'événement qui provoque une interruption est par exemple le déplacement de la souris par le client, une demande de sauvegarde de fichier, etc.

Dans une étape E4 d'exécution de l'interruption, le système d'exploitation OS1 de la machine virtuelle VM1 commande l'exécution de la séquence d'instructions. Les instructions de la séquence sont exécutées sur les ressources virtualisées contrôlées par l'hyperviseur qui fait appel aux ressources matérielles sous-jacentes. C'est donc l'hyperviseur 101, qui met à disposition de la machine virtuelle VM1 les ressources virtualisées, qui commande l'exécution de la séquence d'instructions au moyen des ressources matérielles du système hôte 10. Le résultat de l'exécution de cette séquence d'instructions constitue un flux de données destiné à être transmis à la machine virtuelle VM1.

Dans une étape E5 de duplication de flux et d'envoi, l'hyperviseur 101 duplique le flux destiné à la machine virtuelle VM1 et obtient un flux dupliqué. Il transmet alors le flux de manière classique à la machine virtuelle VM1 et le flux dupliqué à la machine virtuelle dupliquée VM1', plus précisément aux systèmes d'exploitation respectifs des machines virtuelles VM1, VM1'. En d'autres termes, lors du traitement d'une interruption, les entrées et événements en provenance du processeur du serveur hôte 10 et à destination des périphériques d'entrée/sortie de la machine virtuelle VM1 qui constituent le flux de données sont capturés par l'hyperviseur 101 et transmis aux deux machines virtuelles VM1, VM1'.

Dans une étape E6 de traitement et de supervision, la machine virtuelle VM1 et la machine virtuelle dupliquée VM1' sont modifiées conformément aux entrées et événements reçus. L'interruption est alors traitée d'une part au niveau de la machine virtuelle VM1 et d'autre part au niveau de la machine virtuelle dupliquée VM1'. On comprend que toute modification au niveau de la machine virtuelle VM1, consécutive au traitement de l'interruption, est répercutée de la même façon et au même moment sur la machine virtuelle dupliquée VM1'. Il n'y a cependant aucun partage de charge entre les machines virtuelles, ni aucune redondance puisque les machines virtuelles sont complètement distinctes, c'est-à-dire sur des pages mémoire disjointes. La machine virtuelle VM1 ne subit donc aucun effet de bord du fait de la duplication du flux et du traitement effectué sur la machine virtuelle dupliquée VM1'. A noter que la duplication du flux fait partie du traitement de l'interruption. On dit qu'elle est atomique dans le sens où les étapes de E5 de duplication du flux et de transmission du flux à la machine virtuelle VM1 et à la machine virtuelle dupliquée VM1' et de traitement E6 s'exécutent dans la phase non interruptible de traitement de l'interruption. Parallèlement à ce traitement, l'agent de sécurité 102 mis en œuvre sur la machine dupliquée VM1' supervise les événements qui surviennent au niveau du système d'exploitation de la machine virtuelle dupliquée VM1' au cours de l'étape E6 de traitement et de supervision afin de détecter d'éventuels problèmes de sécurité. L'agent de sécurité 102 est configuré pour superviser certains types d'événement. Par exemple, dans un cas où il est configuré pour détecter la présence de virus, l'agent de sécurité 102 supervise le comportement du système d'exploitation de la machine dupliquée VM1' et analyse le flux dupliqué reçu afin de détecter la présence d'un virus. Dans un autre exemple, l'agent de sécurité 102 est configuré pour superviser des échanges réseau. Il analyse le flux dupliqué de manière à détecter la présence d'instructions réseau suspectes. Dans un autre exemple de réalisation, l'agent de sécurité 102 est configuré pour détecter des accès non autorisés à des zones mémoire par certains programmes. Il analyse le flux dupliqué et connaît par ailleurs les accès licites via des tables stockées en mémoire vive. L'invention n'est bien sûr pas limitée à la détection d'un type de problème de sécurité et l'agent de sécurité 102 peut être configuré de manière à détecter une pluralité de types de problèmes.

Toute donnée associée à un problème de sécurité détecté sur la machine virtuelle VM1' est transmis par l'agent de sécurité 102 à l'analyseur pour analyse et alerte le cas échéant. L'analyseur est un module logiciel compris par exemple dans une machine virtuelle de sécurité, distincte de la machine virtuelle VM1 et de la machine virtuelle dupliquée VM1'. Il peut être sur le serveur hôte 10 ou sur un serveur hôte distinct. L'analyseur peut alerter le client d'un problème de sécurité. Il peut également être adapté pour mettre en œuvre des contre-mesures. A noter que l'agent de sécurité 102 n'est pas apte à mettre en œuvre une quelconque mesure de protection sur la machine virtuelle dupliquée VM1'. Il est important que l'agent de sécurité 102 n'ait pas un caractère intrusif. En effet, le procédé de supervision nécessite de maintenir identiques les états de la machine virtuelle VM1 et de la machine dupliquée VM1'. Aucune action ne peut donc être entreprise sur la machine dupliquée VM1' au risque de générer un état différent sur la machine dupliquée VM1'.

Avec la solution de supervision de la sécurité décrite ici, le client est assuré que sa machine virtuelle n'est jamais compromise puisque l'agent de sécurité 102 n'est pas installé sur la machine virtuelle VM1 du client.

Les étapes E5 de duplication, E6 de traitement et de supervision sont itérées durant tout le temps que la machine virtuelle du client VM1 s'exécute sur le serveur hôte 10, notamment à chaque traitement d'une interruption.

L'invention est décrite ici dans le cas où un client a souscrit à une offre de type IaaS. L'invention n'est cependant pas limitée à ce type d'offre et s'applique également lorsqu'un client souscrit à des offres de type PaaS ou SaaS. On remarque cependant que la solution de sécurité proposée ici est particulièrement intéressante dans le cas d'une architecture IaaS. En effet, avec une offre IaaS, le fournisseur de services cloud met à disposition du client des ressources et le client installe ensuite les logiciels qu'il souhaite, y compris le système d'exploitation. A ce niveau, le fournisseur de services cloud a la maîtrise complète des machines virtuelles de l'architecture et est assuré de pouvoir déployer l'agent de sécurité

Dans le procédé décrit précédemment, il y a duplication de la machine virtuelle VM1 et l'agent de sécurité 102 est installé par l'hyperviseur 101 sur la machine virtuelle dupliquée VM1'. L'invention n'est pas limitée à une telle mise en œuvre. Ainsi, dans un autre exemple de réalisation, décrit en relation avec la figure 3, l'agent de sécurité 102 qui est initialement compris dans la couche de virtualisation 10-2 demeure au même niveau que l'hyperviseur 101, c'est-à-dire dans la couche de virtualisation 10-2, pour la supervision de la sécurité de la machine virtuelle VM1.

Le procédé comprend une phase de configuration P0', identique à la phase de configuration P0 décrite en relation avec la figure 2.

Dans une étape E0' de démarrage ou de redémarrage de la machine virtuelle VM1 et de construction, l'agent de sécurité 102 construit une représentation de la machine virtuelle VM1 à partir de tous les événements qui surviennent au niveau du processeur et de la mémoire vive lors du démarrage ou du redémarrage de la machine virtuelle VM1. C'est l'hyperviseur 101, en charge de la mise en œuvre de la machine virtuelle VM1 dans l'environnement d'exécution qui transmet l'ensemble de ces informations à l'agent de sécurité 102. La représentation de la machine virtuelle VM1 construite par l'agent de sécurité 102 tient compte de ce pour quoi l'agent de sécurité 102 est configuré. Ainsi, si l'agent 102 est configuré pour détecter la présence de virus, il construit une base de connaissance à partir des fichiers présents sur le système de fichiers sous-jacent et met à jour cette base en fonction des modifications apportées au système de fichiers. Il opère ensuite sur cette base de connaissance selon des méthodes connues afin de détecter la présence de virus. Par exemple, il calcule des hash de fichiers ou observe des appels de fonctions. L'agent de sécurité 102 construit ainsi une représentation de la machine virtuelle VM1 en fonction des événements qu'il est sensé superviser et pour lequel il a été configuré. On comprend que la représentation de la machine virtuelle VM1 nécessite moins d'espace mémoire qu'une duplication complète de la machine VM1. Au terme de l'étape E0' de démarrage, l'agent de sécurité 102 dispose en mémoire d'une représentation de la machine virtuelle VM1.

Dans une étape E1' de réception d'une interruption, identique à l'étape E3 selon la figure 2, l'hyperviseur 101 reçoit du système d'exploitation OS1 de la machine virtuelle VM1 une séquence d'au moins une instruction correspondant à une routine d'interruption. La réception de la routine fait suite à une interruption au niveau du système d'exploitation OS1 consécutif à un événement survenu au niveau de la machine virtuelle VM1.

Dans une étape E2' d'exécution de l'interruption, identique à l'étape E4 décrite en relation avec la figure 1, l'hyperviseur 102 commande l'exécution des instructions de la séquence à partir des ressources matérielles du système hôte 10. Le résultat de l'exécution de cette séquence, destiné à être transmis au système d'exploitation OS1, constitue un flux de données.

Dans une étape E3' de duplication de flux et d'envoi, l'hyperviseur 101 duplique le flux de données destiné à être transmis à la machine virtuelle VM1 et obtient un flux dupliqué. Il transmet alors le flux de manière classique à la machine virtuelle VM1 et le flux dupliqué à l'agent de sécurité 102.

Dans une étape E4' de traitement et de supervision, l'agent de sécurité 102 modifie la représentation de la machine virtuelle VM1 qu'il a construite en fonction du flux de données dupliqué reçu et dans la mesure où le flux de données dupliqué reçu concerne un type d'événement qu'il supervise. Dans ce cas il modifie la représentation de la machine virtuelle VM1 de la même manière que la machine virtuelle VM1 est modifiée par le flux reçu. Parallèlement à ce traitement, l'agent de sécurité 102 supervise lors de ce traitement, les événements qui surviennent au niveau de la représentation de la machine virtuelle VM1 qu'il a construite, afin de détecter d'éventuels problèmes de sécurité. Ainsi, il analyse le flux dupliqué reçu. Dans le cas où l'agent de sécurité 102 est configuré pour détecter la présence de virus, l'agent de sécurité analyse si les données comprises dans le flux dupliqué comprennent une signature de virus connu.

A noter que la duplication de flux fait partie du traitement de l'interruption. On dit qu'elle est atomique dans le sens où les étapes E3' de duplication de flux et E4' de supervision sont exécutées de manière atomique et font partie de la phase non interruptible de traitement de l'interruption.

Ce mode de réalisation est avantageux dans le sens où il nécessite moins d'espace mémoire. En effet, il n'y a pas duplication de machine virtuelle VM1 donc aucun besoin de place mémoire pour la machine virtuelle dupliquée VM1'. Cependant, la complexité de l'agent de sécurité 102 est plus importante. En effet, l'agent de sécurité 102 doit être adapté pour construire une représentation de la machine virtuelle VM1. Il doit par ailleurs être adapté pour modifier la représentation de la machine virtuelle VM1 à chaque fois qu'il reçoit un flux dupliqué qui concerne le type d'événement qu'il supervise. Cette complexité de l'agent A peut nuire aux performances de la solution.

Ce mode de réalisation est également bien adapté aux offres de type IaaS. En effet, fournir un agent de sécurité adapté pour superviser la sécurité à partir de l'observation des ressources, en supervisant l'utilisation celles-ci, permet de définir plus facilement un agent générique, apte à détecter plusieurs types de problème. Un tel agent générique peut alors être décliné en un agent de sécurité spécialisé pour détecter un certain type de problème de sécurité.

Un dispositif de supervision de la sécurité d'une machine virtuelle, selon un exemple de réalisation de l'invention, va maintenant être décrit en relation avec la figure 4.

Un dispositif de supervision 10 est un équipement informatique tel qu'un terminal ou un serveur. Selon le modèle d'architecture décrit en relation avec la figure 1, le dispositif de supervision est un serveur hôte 10, adapté pour héberger des machines virtuelles de client, par exemple la machine virtuelle VM1 (représentée en pointillés sur la figure 4). Le dispositif de supervision 10 comprend une couche de virtualisation 10-2 destinée à héberger un agent de sécurité 102 et un hyperviseur 101. L'hyperviseur 101 est adapté pour virtualiser des ressources du serveur hôte 10 afin de fournir à la machine virtuelle VM1 les ressources qui lui sont nécessaires.

Le dispositif de supervision 10 comprend de manière classique :
- un microprocesseur 103, ou «CPU» (de l'anglais «Central Processing Unit»), destiné à charger des instructions en mémoire, à les exécuter, à effectuer des opérations,
- une ensemble de mémoires, dont une mémoire volatile 104, ou «RAM» (pour « Random Access Memory ») utilisée pour exécuter des instructions de code, stocker des variables, etc.,
- une mémoire de stockage 105 de type «ROM» ou « EEPROM » (de l'anglais « Read-Only Memory » et « Electronically-Erasable Programmable Read-Only Memory). La mémoire de stockage 105 est agencée pour mémoriser des applications qui comprennent des instructions de code pour mettre en œuvre les étapes du procédé de supervision réalisées par le dispositif de supervision. En particulier, elle mémorise des instructions de code pour la mise en œuvre de l'hyperviseur 101 et de l'agent de sécurité 102 dans la couche de virtualisation 10-2. Dans cet exemple de réalisation décrit ici, l'agent de sécurité 102 est distinct de l'hyperviseur 101. Dans un autre exemple de réalisation, l'agent de sécurité 102 fait partie de l'hyperviseur ;
- des interfaces de communication 106, agencées pour que les entités communiquent. En particulier, les interfaces 106 sont adaptées pour faciliter la communication avec l'agent de sécurité 102, la machine virtuelle VM1 et son système d'exploitation OS1, etc. Les interfaces de communication 106 sont également agencées pour accéder à la base de données clients 11 (non représentée sur la figure 4).

On comprend, au vu de la description du modèle en cloud computing fourni en relation avec la figure 1 que le microprocesseur 103, les mémoires 104, 105, les interfaces de communication 106 sont des ressources matérielles qui appartiennent à la couche d'exécution matérielles 10-1. Ces ressources sont destinées à être virtualisées par l'hyperviseur 101 et être mises à disposition de machines virtuelles sous forme virtualisées.

Le dispositif de supervision 10 comprend également :
- des moyens de réception 107, agencés pour recevoir en provenance du système d'exploitation de la machine virtuelle VM1 au moins une instruction machine associée correspondant à une interruption au niveau du système d'exploitation, ladite interruption étant consécutive à un événement survenu au niveau de la machine virtuelle. Les moyens de réception 107 sont agencés pour mettre en œuvre les étapes E3 et E1' du procédé de supervision décrit précédemment ;
- des moyens 108 d'exécution de l'interruption, agencés pour exécuter ladite instruction en utilisant les ressources matérielles du système hôte. Le résultat de l'exécution de cette séquence, destiné à être transmis au système d'exploitation OS1 de la machine virtuelle VM1, constitue un flux de données. Les moyens d'exécution de l'interruption 108 sont agencés pour mettre en œuvre les étapes E4 et E2' du procédé de supervision décrit précédemment ;
- des moyens de duplication 109 agencés pour dupliquer le flux reçu en un second flux. Les moyens de duplication 109 sont agencés pour mettre en œuvre les étapes E5 et E3' du procédé de supervision décrit précédemment ;
- l'agent de sécurité 102, distinct de la machine virtuelle VM1, agencés pour traiter et superviser le second flux pour détecter un problème de sécurité lors du traitement de l'interruption. L'agent de sécurité 102 est agencé pour mettre en œuvre les étapes E6 et E4' du procédé de supervision décrit précédemment.

Les interfaces de communication 106, les moyens de réception 107, les moyens 108 d'exécution de l'interruption, les moyens de duplication 109, l'agent de sécurité 102, l'hyperviseur 101 sont de préférence des modules logiciels comprenant des instructions logicielles pour faire exécuter les étapes du procédé de supervision précédemment décrit.

L'invention concerne donc aussi :
- un programme d'ordinateur comportant des instructions pour la mise en œuvre du procédé de supervision de la sécurité tel que décrit précédemment lorsque ce programme est exécuté par un processeur du dispositif de supervision 10,
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

Dans un autre exemple de réalisation, correspondant au cas où la machine virtuelle VM1 est dupliquée en une machine virtuelle VM1', le dispositif de supervision 10 comprend également :
- des deuxièmes moyens de duplication (non représentés sur la figure 4), agencés pour dupliquer la machine virtuelle VM1 en la machine virtuelle dupliquée VM1', et
- des moyens d'installation (non représentés), agencés pour installer l'agent de sécurité 102 sur la machine dupliquée VM1'.

## Revendications

1. **Procédé de supervision** de la sécurité d'une machine virtuelle (VM1) hébergée par un système hôte (10), la machine virtuelle comprenant un système d'exploitation (OS1), ledit système d'exploitation communiquant avec un hyperviseur (101) du système hôte, ledit hyperviseur s'interfaçant entre le système d'exploitation et des ressources matérielles du système hôte, ledit procédé étant caractérisé en qu'il comprend les étapes suivantes :
- duplication (E1) par l'hyperviseur de la machine virtuelle (VM1) en une machine virtuelle dupliquée (VM1') ;
- réception (E3) par l'hyperviseur en provenance du système d'exploitation de la machine virtuelle d'au moins une instruction machine correspondant à une interruption au niveau dudit système d'exploitation, ladite interruption étant consécutive à un événement survenu au niveau de la machine virtuelle (VM1) ;
- exécution (E4) de l'instruction par l'hyperviseur au moyen des ressources matérielles du système hôte et;
- de manière atomique, duplication (E5) par l'hyperviseur d'un premier flux de données comprenant le résultat de l'exécution en un second flux de données, transmission par l'hyperviseur dudit premier flux au système d'exploitation de la machine virtuelle et transmission par l'hyperviseur dudit second flux au système d'exploitation de la machine virtuelle dupliquée ;
- traitement (E6) de l'interruption par modification de la machine virtuelle conformément au premier flux de données ;
- traitement (E6) de l'interruption par modification de la machine virtuelle dupliquée conformément au second flux de données et supervision (E6, E4') des événements au niveau du système d'exploitation de la machine virtuelle dupliquée par un agent de sécurité (102) installé sur la machine virtuelle dupliquée pour détecter un problème de sécurité lors du traitement de l'interruption.

2. Procédé de supervision selon la revendication 1, comprenant une étape d'installation (E2), par ledit hyperviseur, de l'agent de sécurité (102) sur la machine virtuelle dupliquée (VM1').

3. **Système de supervision** (10) de la sécurité d'une machine virtuelle (VM1), comprenant :
- un module hyperviseur (101) adapté pour superviser la sécurité d'une machine virtuelle (VM1) hébergée par un système hôte (10), ladite machine virtuelle comprenant un système d'exploitation (OS1) communiquant avec ledit module hyperviseur (101), ledit module hyperviseur s'interfaçant entre le système d'exploitation et des ressources matérielles (10-1) du système hôte, ledit module hyperviseur comprenant :
- des premiers moyens (109) de duplication d'une machine virtuelle, agencés pour dupliquer la machine virtuelle (VM1) en une machine virtuelle dupliquée (VM1') ;
- des moyens de réception (107), agencés pour recevoir en provenance du système d'exploitation (OS1) de la machine virtuelle au moins une instruction machine correspondant à une interruption au niveau du système d'exploitation, ladite interruption étant consécutive à un événement survenu au niveau de la machine virtuelle (VM1) ;
- des moyens (108) d'exécution, agencés pour commander l'exécution de l'instruction au moyen des ressources matérielles du système hôte (10) et pour obtenir un premier flux de données comprenant le résultat de l'exécution ;
- des seconds moyens (109) de duplication, agencés pour dupliquer ledit premier flux en un second flux de données ;
- des moyens de transmission, agencés pour transmettre le premier flux au système d'exploitation de la machine virtuelle et pour transmettre ledit second flux au système d'exploitation de la machine virtuelle dupliquée;- des moyens agencés pour permettre l'exécution atomique des seconds moyens (109) de duplication et des moyens de transmission;
- une machine virtuelle (VM1), agencée pour traiter l'interruption par modification de la machine virtuelle conformément au premier flux de données ;
- une machine virtuelle dupliquée (VM1') obtenue par duplication de ladite machine virtuelle (VM1), agencée pour traiter l'interruption par modification de la machine virtuelle dupliquée conformément au second flux de données, ladite machine virtuelle comprenant un agent de sécurité (102) installé pour superviser des événements au niveau du système d'exploitation de la machine virtuelle pour détecter un problème de sécurité lors du traitement de l'interruption.

4. Système selon la revendication 3, dans lequel le module hyperviseur comprend des moyens d'installation, agencés pour installer ledit agent de sécurité (102) sur la machine virtuelle dupliquée (VM1').

## Patentansprüche

1. Verfahren zur Überwachung der Sicherheit einer virtuellen Maschine (VM1), die von einem Host-System (10) beherbergt wird, wobei die virtuelle Maschine ein Betriebssystem (OS1) umfasst, das Betriebssystem mit einem Hypervisor (101) des Host-Systems kommuniziert, der Hypervisor eine Schnittstelle zwischen dem Betriebssystem und materiellen Ressourcen des Host-Systems bildet, wobei das Verfahren **dadurch gekennzeichnet ist, dass** es die folgenden Schritte umfasst:
- Duplizieren (E1) der virtuellen Maschine (VM1) zu einer duplizierten virtuellen Maschine (VM1') durch den Hypervisor;
- Empfangen (E3) wenigstens einer Maschinenanweisung, die einer Unterbrechung auf der Ebene des Betriebssystems entspricht, vom Hypervisor von dem Betriebssystem der virtuellen Maschine, wobei die Unterbrechung auf ein Ereignis folgt, das auf der Ebene der virtuellen Maschine (VM1) eingetreten ist;
- Ausführen (E4) der Anweisung durch den Hypervisor mittels der materiellen Ressourcen des Host-Systems, und;
- atomisches Duplizieren (E5) eines ersten Datenstroms, der das Ergebnis der Ausführung umfasst, zu einem zweiten Datenstrom durch den Hypervisor, Übertragen des ersten Stroms durch den Hypervisor an das Betriebssystem der virtuellen Maschine und Übertragen des zweiten Stroms durch den Hypervisor an das Betriebssystem der duplizierten virtuellen Maschine;
- Verarbeiten (E6) der Unterbrechung durch Änderung der virtuellen Maschine entsprechend dem ersten Datenstrom;
- Verarbeiten (E6) der Unterbrechung durch Änderung der duplizierten virtuellen Maschine entsprechend dem zweiten Datenstrom und Überwachen (E6, E4') der Ereignisse auf der Ebene des Betriebssystems der duplizierten virtuellen Maschine durch einen Sicherheitsagenten (102), der auf der duplizierten virtuellen Maschine installiert ist, um ein Sicherheitsproblem bei der Verarbeitung der Unterbrechung zu detektieren.

2. Überwachungsverfahren nach Anspruch 1, umfassend einen Schritt des Installierens (E2) des Sicherheitsagenten (102) auf der virtuellen Maschine (VM1') durch den Hypervisor.

3. System zur Überwachung (10) der Sicherheit einer virtuellen Maschine (VM1), umfassend:
- ein Hypervisor-Modul (101), das geeignet ist, die Sicherheit einer virtuellen Maschine (VM1) zu überwachen, die von einem Host-System (10) beherbergt wird, wobei die virtuelle Maschine ein Betriebssystem (OS1) umfasst, das mit dem Hypervisor (101) kommuniziert, das Hypervisor-Modul eine Schnittstelle zwischen dem Betriebssystem und materiellen Ressourcen (10-1) des Host-Systems bildet, das Hypervisor-Modul umfassend:
- erste Mittel (109) zur Duplizierung einer virtuellen Maschine, die angeordnet sind, die virtuelle Maschine (VM1) zu einer duplizierten virtuellen Maschine (VM1') zu duplizieren;
- Empfangsmittel (107), die angeordnet sind, vom Betriebssystem (OS1) der virtuellen Maschine wenigstens einer Maschinenanweisung zu empfangen, die einer Unterbrechung auf der Ebene des Betriebssystems entspricht, wobei die Unterbrechung auf ein Ereignis folgt, das auf der Ebene der virtuellen Maschine (VM1) eingetreten ist;
- Ausführungsmittel (108), die angeordnet sind, die Ausführung der Anweisung mittels der materiellen Ressourcen des Host-Systems (10) zu steuern und einen ersten Datenstrom zu erhalten, der das Ergebnis der Ausführung umfasst;
- zweite Duplizierungsmittel (109), die angeordnet sind, den ersten Strom zu einem zweiten Datenstrom zu duplizieren;
- Übertragungsmittel, die angeordnet sind, den ersten Strom an das Betriebssystem der virtuellen Maschine zu übertragen und den zweiten Strom an das Betriebssystem der duplizierten virtuellen Maschine zu übertragen;
- Mittel, die angeordnet sind, die atomische Ausführung der zweiten Duplizierungsmittel (109) und der Übertragungsmittel zu gestatten;
- eine virtuelle Maschine (VM1), die angeordnet ist, die Unterbrechung durch Änderung der virtuellen Maschine entsprechend dem ersten Datenstrom zu verarbeiten;
- eine duplizierte virtuelle Maschine (VM1'), die durch Duplizierung der virtuellen Maschine (VM1) erhalten wird, die angeordnet ist, die Unterbrechung durch Änderung der duplizierten virtuellen Maschine entsprechend dem zweiten Datenstrom zu verarbeiten, wobei die virtuelle Maschine einen Sicherheitsagenten (102) umfasst, der installiert ist, um Ereignisse auf der Ebene des Betriebssystems der virtuellen Maschine zu überwachen, um ein Sicherheitsproblem bei der Verarbeitung der Unterbrechung zu detektieren.

4. System nach Anspruch 3, wobei das Hypervisor-Modul Installationsmittel umfasst, die angeordnet sind, den Sicherheitsagenten (102) auf der duplizierten virtuellen Maschine (VM1') zu installieren.

## Claims

1. **Monitoring method** for monitoring the security of a virtual machine (VM1) hosted by a host system (10), the virtual machine comprising an operating system (OS1), said operating system communicating with a hypervisor (101) of the host system, said hypervisor interfacing between the operating system and hardware resources of the host system, said method being **characterized in that** it comprises the following steps:
- the hypervisor duplicating (E1) the virtual machine (VM1) as a duplicated virtual machine (VM1');
- the hypervisor receiving (E3), from the operating system of the virtual machine, at least one machine instruction corresponding to an interrupt in said operating system, said interrupt following an event which has occurred in the virtual machine (VM1),
- the hypervisor executing (E4) the instruction using the hardware resources of the host system and;
- the hypervisor atomically duplicating (E5) a first data stream comprising the result of the execution as a second data stream, the hypervisor transmitting said first stream to the operating system of the virtual machine and the hypervisor transmitting said second stream to the operating system of the duplicated virtual machine;
- processing (E6) the interrupt by modifying the virtual machine in accordance with the first data stream;
- processing (E6) the interrupt by modifying the duplicated virtual machine in accordance with the second data stream and a security agent (102), which is installed on the duplicated virtual machine, monitoring (E6, E4') the events in the operating system of the duplicated virtual machine so as to detect a security problem during the processing of the interrupt.

2. Monitoring method according to Claim 1, comprising a step of said hypervisor installing (E2) the security agent (102) on the duplicated virtual machine (VM1').

3. **Monitoring system** (10) for monitoring the security of a virtual machine (VM1), comprising:
- a hypervisor module (101) suitable for monitoring the security of a virtual machine (VM1) hosted by a host system (10), said virtual machine comprising an operating system (OS1) communicating with said hypervisor module (101), said hypervisor module interfacing between the operating system and hardware resources (10-1) of the host system, said hypervisor module comprising:
- first means (109) for duplicating a virtual machine, which are arranged to duplicate the virtual machine (VM1) as a duplicated virtual machine (VM1');
- reception means (107), arranged to receive, from the operating system (OS1) of the virtual machine, at least one machine instruction corresponding to an interrupt in the operating system, said interrupt following an event which has occurred in the virtual machine (VM1);
- execution means (108), arranged to command the execution of the instruction using the hardware resources of the host system (10) and to obtain a first data stream comprising the result of the execution;
- second duplication means (109), arranged to duplicate said first stream as a second data stream;
- transmission means, arranged to transmit the first stream to the operating system of the virtual machine and to transmit said second stream to the operating system of the duplicated virtual machine;
- means arranged to allow the atomic execution of the second duplication means (109) and of the transmission means;
- a virtual machine (VM1), arranged to process the interrupt by modifying the virtual machine in accordance with the first data stream;
- a duplicated virtual machine (VM1') obtained by duplicating said virtual machine (VM1), arranged to process the interrupt by modifying the duplicated virtual machine in accordance with the second data stream, said virtual machine comprising a security agent (102) installed to monitor events in the operating system of the virtual machine so as to detect a security problem during the processing of the interrupt.

4. System according to Claim 3, wherein the hypervisor module comprises installation means, which are arranged to install said security agent (102) on the duplicated virtual machine (VM1').
